# EUROPÄISCHE PATENTSCHRIFT

(11) **EP 1 896 914 B1**
(45) Veröffentlichungstag und Bekanntmachung des Hinweises auf die Patenterteilung: **24.12.2014**
(21) Anmeldenummer: 05759373.3
(22) Anmeldetag: 24.06.2005
(51) Int. Cl.: G05D 7/06, G02B 26/08, B23K 26/06

(54) **ADAPTIVER SPIEGEL EINER OPTIK EINER LASERBEARBEITUNGSMASCHINE**
ADAPTIVE MIRROR IN THE OPTICS OF A LASER MACHINING TOOL
MIROIR ADAPTATIF DE L'OPTIQUE D'UNE MACHINE D'USINAGE AU LASER

(43) Veröffentlichungstag der Anmeldung: 12.03.2008
(73) Patentinhaber: TRUMPF Werkzeugmaschinen GmbH + Co. KG, 71254 Ditzingen (DE)
(72) Erfinder: HAMMANN, Gerhard, 70825 Korntal-Münchingen (DE)
(74) Vertreter: Kohler Schmid Möbus
(86) Internationale Anmeldenummer: PCT/EP2005/006839
(87) Internationale Veröffentlichungsnummer: WO 2007/000171

(56) Entgegenhaltungen:
- DE-A1- 3 900 467
- DE-A1- 4 137 832
- DE-A1- 19 613 252
- US-A- 5 241 991
- US-A1- 2005 117 232
- US-B1- 6 378 558

## Beschreibung

Die vorliegende Erfindung betrifft eine Spiegelanordnung einer Optik einer Laserbearbeitungsmaschine mit einer einen Hohlraum aufweisenden Fassung und einem adaptiven Spiegel.

Derartige Spiegelanordnungen sind wesentliche Bestandteile von Lasern und Laserbearbeitungsmaschinen. Die Spiegel können zur Umlenkung von Laserstrahlen eingesetzt werden. Durch die Druckbeaufschlagung der Spiegel rückseite kann die Brennweite des Spiegels verändert werden.

Durch die DE 3900467 A1 ist ein derartiger Spiegel bekannt geworden.

Bei den bekannten Anordnungen wird die gewünschte Brennweite eines Umlenkspiegels durch eine entsprechende Druckbeaufschlagung der Spiegelrückseite eingestellt. Dieser Spiegel ist in den Kühlwasserkreislauf des Lasers integriert. Die Druckeinstellung gegen eine Festdrossel im Abflusszweig erfolgt über ein Proportionalventil. Die erreichbare Dynamik der bekannten Anordnung wird einerseits durch die Eckfrequenz des Regelsystems (elektromagnetisch angesteuertes Sitzventil) begrenzt und andererseits durch die Rückwirkung der Achsbeschleunigung auf das Übertragungsmedium (Wassersäule) beeinflusst. Es wird eine typische Eckfrequenz des geregelten Systems von ≈ 10 Hz erreicht. Dabei werden Achsbeschleunigungen vorn ≈ 2 g als zulässige Obergrenze angesehen. Die bekannte Anordnung mit Sitzventil und Festdrossel ist sehr störanfällig gegen Verschmutzung.

Durch die US 6,751,004 B2 ist der Einsatz von magnetorheologischen Fluiden bekannt geworden.

Die DE 10157983 A1 beschreibt ein Verfahren und eine Vorrichtung zum Positionieren und/oder Bearbeiten von Werkstücken mit einer Laserbearbeitungsmaschine.

Der Erfindung liegt die Aufgabe zu Grunde, den Einsatz einer Spiegelanordnung mit einer höheren Dynamik zu ermöglichen, ohne dass Störungen und Verschleiß auftreten.

Diese Aufgabe wird gemäß Patentanspruch 1 durch eine Spiegelanordnung einer Optik einer Laserbearbeitungsmaschine mit einer einen Hohlraum aufweisenden Fassung und einem adaptiven Spiegel gelöst, bei der in dem Hohlraum ein magnetorheologisches oder elektrorheologisches Fluid zur Druckbeaufschlagung der Spiegelrückseite angeordnet ist, wobei sich in dem Hohlraum ein magnetorheologisches oder elektrorheologisches Fluidventil zur Druckeinstellung durch Veränderung des Fließdrucks des magnetorheologischen oder elektrorheologischen Fluids befindet.

Die erfindungsgemäße Spiegelanordnung ist störunanfällig gegen Verschmutzung, weil das benötigte Ventil aufgrund der vergleichsweise großen Strömungsquerschnitte völlig unproblematisch ist. Hinzu kommt, dass ein solches Ventil keine bewegten Teile enthält. Ein System auf der Basis eines in den Spiegelkörper integrierten Ventils eröffnet eine völlig neue Dimension hinsichtlich Dynamik und Robustheit. Eine Integration des magnetorheologischen oder elektrorheologischen Ventils (im Folgenden ERF-Ventil genannt) in den Spiegel bietet sich an, um zusammen mit einer direkten Messung des Staudrucks das Totvolumen in der Regelstrecke zu minimieren. Eckfrequenzen des ERF-Systems von deutlich über 100 Hz sind möglich. Die Schaltzeiten der magnetorheologischen oder elektrorheologischen Flüssigkeiten liegen im Bereich einer Millisekunde.

Wenn ein Sensor zur direkten Druckmessung des elektrorheologischen oder magnetorheologischen Fluids vorgesehenen ist, kann die Steuerung des Fluidventils besonders einfach durchgeführt werden. Dies ist vorteilhaft für den Einsatz der erfindungsgemäßen Spiegelanordnung.

Die Vorteile der Erfindung bestehen darin, dass elektrische Signale direkt in mechanische Eigenschaften umgewandelt werden. Vorteilhafterweise werden hervorragende Ansprechzeiten von Ventilen oder Aktoren erzielt. Es ergeben sich hohe Freiheitsgerade bei der Gestaltung und Integration der Komponenten. Ein weiterer Vorteil der Erfindung ist es, dass ein einfacher mechanischer Aufbau denkbar ist. Die benötigten Ventile verschleißen kaum.

Ein bevorzugtes Ausführungsbeispiel der Erfindung wird anhand der schematischen Zeichnung erläutert. Es zeigt:
- **Figur 1**: eine Draufsicht einer adaptiven Spiegelanordnung;
- **Figur 2**: eine Seitenansicht der Spiegelanordnung gemäß Figur 1.

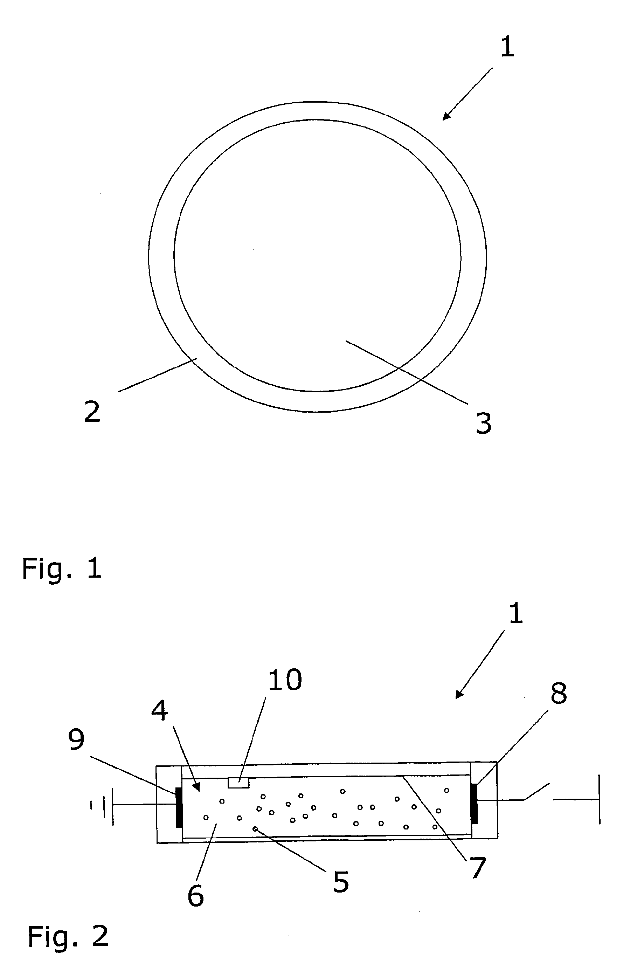

Aus der **Figur 1** ist der Aufbau einer adaptiven Spiegelanordnung **1** einer Laserbearbeitungsmaschine ersichtlich. Eine ringförmige Fassung **2** trägt einen Spiegel **3.** Die ringförmige Fassung 2 nimmt den Spiegel 3 derart auf, dass sich hinter dem Spiegel 3 ein Hohlraum **(****Figur 2****)** ausbildet, der mit einem Fluid **4** ausgefüllt werden kann. Wenn man in diesen Hohlraum mehr oder weniger Druck gibt, ändert sich unter dessen Einfluss die Geometrie des Spiegels 3.

Bei der Spiegelanordnung 1 wird ein elektrorheologisches Fluid verwendet und ein Ventil in die Spiegelanordnung 1 integriert. Elektrorheologische oder magnetorheologische Fluide 4 enthalten feldpolarisierbare Partikel **5** und eine Flüssigkeit **6** als Träger der Partikel. Diese Fluide reagieren auf magnetische Felder bzw. Feldänderungen. Die Partikel können polarisiert und in Ketten angeordnet werden. Es handelt sich um eine Dispersion aus einer unpolaren Trägerflüssigkeit 6 und polarisierbaren Feststoffpartikeln 5. Die Ketten erhöhen die Viskosität des Fluids 4. Ohne ein magnetisches Feld befinden sich die Partikel 5 in einem nicht organisierten Zustand. In diesem Zustand hat das Fluid 4 eine geringere Viskosität als in einem organisierten Zustand, wenn das Fluid 4 einem elektrischen und/oder magnetischen Feld ausgesetzt ist. Das elektrische / magnetische Feld verändert die Fließeigenschaften des Fluids 4. Die Veränderungen reichen von flüssig bis zum Erreichen der Fließgrenze. Die Veränderung kann kontinuierlich und in weniger als einer Millisekunde durchgeführt werden. Hierdurch kann ein mechatronischer Effekt erreicht werden.

Die Spiegelrückseite **7** ist druckbeaufschlagt, und die Druckeinstellung erfolgt durch eine Veränderung des Fließdrucks. Druck und Volumenstrom werden jedoch durch eine Viskositätsänderung des elektrorheologischen Fluids 4 im elektrischen Feld eingestellt. Das Ventil wird gebildet aus einem Strömungskanal mit vergleichsweise großem Querschnitt, in dessen Wandung die Elektroden **8** und **9** zum Aufbau des elektrischen Feldes eingebettet sind. Die Elektroden können auf unterschiedliche Weise ausgebildet sein. Es können auch Wicklungen vorgesehen sein, um ein geeignetes magnetisches Feld zur Steuerung einer magnetorheologischen Flüssigkeit aufzubauen.

Mithilfe eines Sensors **10,** welcher in dem Hohlraum im Bereich des Spiegels 3 angeordnet ist, kann der Druck des elektrorheologischen Fluids direkt gemessen werden. Das elektrorheologische Fluidventil lässt sich in die Steuerung der Laserbearbeitungsmaschine leicht integrieren.

Die gewünschte Brennweite des als Umlenkspiegel einsetzbaren Spiegels 3 einer Laserstrahlführung kann durch eine entsprechende Druckbeaufschlagung der Spiegelrückseite 7 eingestellt werden.

## Patentansprüche

1. Spiegelanordnung (1) einer Optik einer Laserbearbeitungsmaschine mit einer einen Hohlraum aufweisenden Fassung (2) und einem adaptiven Spiegel (3), **dadurch gekennzeichnet, dass** in dem Hohlraum ein magnetorheologisches oder elektrorheologisches Fluid (4) zur Druckbeaufschlagung der Spiegelrückseite (7) angeordnet ist, und dass sich in dem Hohlraum und seiner Wandung ein magnetorheologisches oder elektro-rheologisches Fluidventil zur Druckeinstellung durch Veränderung des Fließdrucks des magnetorheologischen oder elektrorheologischen Fluids (4) befindet.

2. Spiegelanordnung nach Anspruch 1, **dadurch gekennzeichnet, dass** in die Fassung (2) Elektroden (8, 9) eingebettet sind.

3. Spiegelanordnung nach Anspruch 1 oder 2, **dadurch gekennzeichnet, dass** ein Sensor (10) zur direkten Druckmessung der elektrorheologischen oder magnetorheologischen Fluids vorgesehenen ist.

## Claims

1. Mirror assembly (1) for an optical system of a laser machining tool, the mirror assembly comprising: a mount (2) having a cavity, and an adaptive mirror (3), **characterized in that** a magnetorheological or electrorheological fluid (4) is arranged in the cavity for applying pressure to the rear side (7) of the mirror, and that a magnetorheological or electrorheological fluid valve is provided in the cavity and its wall for adjusting the pressure by changing the flow pressure of the magnetorheological or electrorheological fluid (4).

2. Mirror assembly according to claim 1, **characterized in that** electrodes (8, 9) are embedded in the mount (2).

3. Mirror assembly according to claim 1 or 2, **characterized in that** a sensor (10) is provided for directly measuring the pressure of the electrorheological or magnetorheological fluid.

## Revendications

1. Agencement de miroir (1) d'une optique d'une machine d'usinage au laser, comprenant une monture (2) présentant une cavité et un miroir adaptatif (3), **caractérisé en ce que** dans la cavité est disposé un fluide magnétorhéologique ou électrorhéologique (4) destiné à solliciter en pression la face arrière (7) du miroir, et que dans la cavité et sa paroi se trouve une vanne de fluide magnétorhéologique ou électrorhéologique servant à régler la pression par modification de la pression d'écoulement du fluide magnétorhéologique ou électrorhéologique (4).

2. Agencement de miroir selon la revendication 1, **caractérisé en ce que** des électrodes (8, 9) sont intégrées dans la monture (2).

3. Agencement de miroir selon la revendication 1 ou 2, **caractérisé en ce qu'**un capteur (10) servant à mesurer directement la pression du fluide magnétorhéologique ou électrorhéologique est prévu.
